(19) Europäisches Patentamt
European Patent Office
Office européen des brevets

(11) **EP 4 352 391 B1**

(12) **EUROPÄISCHE PATENTSCHRIFT**

(45) Veröffentlichungstag und Bekanntmachung des
Hinweises auf die Patenterteilung:
**02.04.2025  Patentblatt 2025/14**

(21) Anmeldenummer: **22731675.9**

(22) Anmeldetag: **03.06.2022**

(51) Internationale Patentklassifikation (IPC):
**F16K 3/24** *(2006.01)*        **F16K 47/08** *(2006.01)*

(52) Gemeinsame Patentklassifikation (CPC):
**F16K 3/246; F16K 47/08**

(86) Internationale Anmeldenummer:
**PCT/EP2022/065257**

(87) Internationale Veröffentlichungsnummer:
**WO 2022/258538 (15.12.2022 Gazette 2022/50)**

(54) **VENTILKÄFIG FÜR EIN STELLVENTIL**

VALVE CAGE FOR A CONTROL VALVE

LANTERNE DE SOUPAPE DESTINÉE À UNE SOUPAPE DE COMMANDE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **09.06.2021  DE 202021103110 U**

(43) Veröffentlichungstag der Anmeldung:
**17.04.2024  Patentblatt 2024/16**

(73) Patentinhaber: **Samson Aktiengesellschaft
60314 Frankfurt (DE)**

(72) Erfinder:
• **SANDER, Andreas
69514 Laudenbach (DE)**
• **MERSCHER, Michael
63322 Roedermark (DE)**

(74) Vertreter: **Puschmann Borchert Kaiser Klettner
Patentanwälte Partnerschaft mbB
Bajuwarenring 21
82041 Oberhaching (DE)**

(56) Entgegenhaltungen:
EP-A1- 1 419 336      EP-A2- 0 875 705
WO-A1-03/081097      WO-A1-2016/187246
JP-A- S59 140 973      US-B1- 6 250 330

EP 4 352 391 B1

**Beschreibung**

Die Erfindung betrifft einen Ventilkäfig für ein Stellventil gemäß der im Oberbegriff des Anspruches 1 angegebenen Art sowie ein Stellventil gemäß der im Oberbegriff des Anspruches 15 angegebenen Art.

Sogenannte Käfigventile, d.h. einen Ventilkäfig aufweisende Stellventile, sind aus dem Stand der Technik hinreichend bekannt und umfassen in der Regel ein im Ventilgehäuse des Stellventils in axialer Richtung a verfahrbar gelagertes Ventilglied sowie einen mit dem Ventilglied zusammenwirkenden Ventilkäfig. Der Ventilkäfig weist dabei eine Vielzahl von derart angeordneten Drosselkanälen auf, dass über die Hubstellung des Ventilglieds die Öffnungsweite des Ventilkäfigs, also die Anzahl der verschlossenen bzw. geöffneten Drosselkanälen und damit die Drosselquote einstellbar ist. Neben dem Ventilkäfig weisen Käfigventile ferner in bekannter Art und Weise einen mit dem Ventilglied zusammenwirkenden, komplementär zum Ventilglied ausgebildeten Ventilsitz auf, sodass in Schließstellung, also wenn das Ventilglied in Anlage mit dem Ventilsitz ist, das Ventil geschlossen ist. Lediglich beispielhaft wird auf die DE 10 2015 005 611 A1 verwiesen.

Ein Ventilkäfig für Stellventil ist in der WO 2016/187246 offenbart. Der Ventilkäfig umfasst mehrere, sich von seiner Innenkontur zu seiner Außenkontur hin erstreckende Drosselkanäle, die jeweils in Strömungsrichtung betrachtet eine innenkonturseitige Eintrittsöffnung und eine außenkonturseitige Austrittsöffnung aufweisen. Der offenbarte Ventilkäfig zeichnet sich insbesondere dadurch aus, dass die die außenkonturseitigen Austrittsöffnungen achsensymmetrisch zu einer senkrecht zur Erstreckungsrichtung des Ventilkäfigs ausgerichteten Symmetrieachse angeordnet sind.

Gemäß der Offenbarung der WO 2003/016767 ist ein scheibenweiser Aufbau des Ventilkäfigs vorgesehen. D.h., der Ventilkäfig ist aus einer Vielzahl, in axialer Richtung aufeinander gestapelten Scheiben aufgebaut. Die Scheiben sind dabei identisch ausgebildet und umfassen mehrere Strömungswege, die jeweils einen Einlassabschnitt im Bereich des hohlen Mittelteils der Scheibe, einen Auslassabschnitt im ringförmigen Umfang der Scheibe sowie einen den Einlass- und Auslassabschnitt verbindender Zwischenabschnitt, aufweisen. Die Ausbildung der Drosselkanäle in dem aus einer Vielzahl von aufeinander gestapelten Scheiben aufgebauten Ventilkäfig, erfolgt durch eine entsprechende Verdrehung zweier in axialer Richtung betrachtet benachbarter Scheiben zueinander.

Aus dem Stand der Technik ist weiterhin bekannt, dass durch eine entsprechende Ausgestaltung der Drosselkanäle eine gezielte Einflussnahme in Hinblick auf die Durchströmung, die Druckreduzierung und Kavitation ermöglicht ist. Neben einer Ausbildung der zugehörigen Eintritts- bzw. Austrittsöffnungen der Drosselkanäle als Rund-, Quadrat- oder Langlöcher mit einem über der Gesamtlänge geraden oder gewendelten Drosselkanalverlauf, vgl. DE 10 2015 005 611 A1, sind auch Drosselkanäle mit einer gekrümmten, schrägen, konischen und/oder mit Kanten und/oder Hinterschneidungen versehene Innenwandlungen bekannt, siehe DE 10 2016 102 756 A1.

Der Erfindung liegt die Aufgabe zugrunde einen Ventilkäfig gemäß der im Oberbegriff des Anspruches 1 angegebenen Art derart weiterzubilden, dass nach Austritt eines Prozessfluids aus den Drosselkanälen, ein verbessertes Umströmen der Außenseite des Ventilkäfigs ermöglicht ist.

Diese Aufgabe wird durch die kennzeichnenden Merkmale des Anspruches 1 in Verbindung mit seinen Oberbegriffsmerkmalen gelöst.

Die Unteransprüche 2 bis 14 bilden vorteilhafte Weiterbildung des erfindungsgemäßen Ventilkäfigs.

Der für ein Stellventil vorgesehene, im Wesentlichen hülsenförmig ausgebildete Ventilkäfig umfasst in bekannter Art und Weise mehrere sich von einer zylindrischen Innenkontur des Ventilkäfigs zu dessen Außenkontur hin erstreckende, den Ventilkäfig, d.h. die Wandung des Ventilkäfigs, durchdringende Drosselkanäle. In Strömungsrichtung S betrachtet weist somit jeder Drosselkanal eine innenkonturseitige Eintrittsöffnung einen sich daran anschließenden Kanalabschnitt sowie eine außenkonturseitige Austrittsöffnung auf.

Erfindungsgemäß ist nunmehr vorgesehen, dass in Umfangsrichtung u betrachtet der Ventilkäfig mehrere bogenförmig ausgebildete bzw. konvex verlaufende Außenkonturabschnitte aufweist, die jeweils über eine in Strömungsrichtung S betrachtet als Abrisskante wirkende Stufe voneinander getrennt sind.

Die Formulierung "eine als Abrisskante wirkende Stufe voneinander getrennt sind", ist so zu verstehen, dass zwischen zwei aneinander angrenzenden Außenkonturabschnitten eine in Bezug zur Mantelfläche der jeweiligen Außenkonturabschnitte im Wesentlichen senkrecht, d.h. in radialer Richtung r, ausgerichtete Stufe ausgebildet ist. Da die aus der Stufe resultierenden Kante bekanntlich ein Abreißen der Strömung bewirkt, wird diese auch als Abrisskante bezeichnet. Zudem sind die Drosselkanäle erfindungsgemäß derart verlaufend angeordnet, dass die außenkonturseitigen Austrittsöffnungen der Drosselkanäle in der Stufe zwischen zwei Außenkonturabschnitte liegen. D.h., die Drosselkanäle münden jeweils in der zwischen zwei angrenzenden Außenkonturabschnitten ausgebildeten, in Bezug zur Mantelfläche der jeweiligen Außenkonturabschnitte im Wesentlichen senkrecht, also im Wesentlichen in radialer Richtung r ausgerichteten Stufe.

Die erfindungsgemäße Positionierung bzw. Anordnung der Austrittsöffnungen in der Stufe zwischen zwei bogenförmigen bzw. in Strömungsrichtung S betrachtet konvex verlaufenden Außenkonturabschnitten hat den Effekt, dass aufgrund des wirkenden Coanda-Effekts bzw. Van der Waals Kräften das aus den Austrittsöffnungen austretende Prozessfluid sich an den in Strömungsrichtung S betrachtet folgenden bogenförmigen Außenkonturabschnitt "anlegt" und daran entlang strömt. D.h., die aus den Austrittsöffnungen austretenden stromaufwärtigen Prozessfluidströme werden "eng anliegend" und damit bogenförmig bis zur folgenden, stromabwärtigen Abrisskante bzw. Stufe geführt. Die Abrisskante hat wiederum den Effekt, dass ein bewusstes "Abreißen" der Strömung herbeigeführt wird, sodass ein Kreuzen von stromaufwärtigen und stromabwärtigen Prozessfluidströme und damit Verwirbelungen verhindert werden. Die erfindungsgemäße Ausgestaltung erweist sich somit als besonders vorteilhaft, da nunmehr aufgrund der enganliegenden und verwirbelungsreduzierten Strömungsführung ein verbessertes Umströmen der Außenseite des Ventilkäfigs und damit eine optimierte Strömungsumlenkung sichergestellt ist.

Vorzugsweise sind dabei in der Stufe zwischen zwei Außenkonturabschnitten mehrere in axialer Richtung a in Reihe angeordnete Austrittsöffnungen angeordnet bzw. vorgesehen. Alternativ ist denkbar, dass das Käfigventil für jede Stufe jeweils lediglich einen Drosselkanal aufweist, der insbesondere über einen Großteil einer Erstreckung des Ventilkörpers in axiale Richtung ausgebildet ist. Um eine nahezu tangentiale Ausströmung entlang des bogenförmigen Außenkonturabschnitts zu gewährleisten und damit eine optimale Ausnutzung des Coanda-Effekts zu ermöglichen, ist gemäß einer besonders vorteilhaften Ausführungsform der Erfindung vorgesehen, dass die in einer Reihe angeordneten Austrittsöffnungen jeweils tangential angrenzend an den in Strömungsrichtung S betrachtet sich anschließenden bogenförmigen Außenkonturabschnitt ausgerichtet sind.

Eine alternative Ausgestaltung zur optimalen Nutzung des Coanda-Effekts sieht vor, dass in der Stufe ein sich in axialer Richtung a erstreckender Schlitz ausgebildet ist, in den die in Reihe angeordneten Austrittsöffnungen münden, wobei der Schlitz tangential angrenzend an den in Strömungsrichtung S betrachtet sich anschließenden bogenförmigen Außenkonturabschnitt ausgerichtet ist.

Gemäß einer weiteren vorteilhaften Ausführungsform der Erfindung weist der Ventilkäfig in Umfangsrichtung u betrachtet eine gerade Anzahl n von Stufen und bogenförmig ausgebildeten Außenkontur Abschnitten auf.

Wie erste Versuche gezeigt haben, liegen in Bezug auf die beabsichtigte Strömungsumlenkung optimierte Ergebnisse vor, wenn die Anzahl n der Stufen und der bogenförmigen ausgebildeten Außenkonturabschnitten so gewählt ist, dass

$$6 \leq \text{Anzahl } n \leq 40.$$

Eine weitere, besonders vorteilhafte Ausführungsform des erfindungsgemäßen Ventilkäfigs zeichnet sich dadurch aus, dass die n-bogenförmigen Außenkonturabschnitte und die n-Stufen achsensymmetrisch zu einer senkrecht zur Erstreckungsrichtung des im Wesentlichen hülsenförmig ausgebildete Ventilkäfigs ausgerichteten Symmetrieachse angeordnet sind. D.h., in der Draufsicht betrachtet weist der Ventilkäfig zwei identische Hälften auf, mit dem Effekt, dass in einer Hälfte das Prozessfluid im Uhrzeigersinn und in der anderen Hälfte gegen den Uhrzeigersinn um den Ventilkäfig herumgeführt wird, sodass das aus Austrittsöffnungen austretende Prozessfluid stets auf dem kürzesten Weg um den Ventilkäfig geführt wird.

Damit das aus den Austrittsöffnungen austretende Prozessfluid bereits einen gekrümmten, dem bogenförmigen Außenkonturabschnitt im Wesentlichen entsprechenden Strömungsverlauf aufweist, ist gemäß einer weiteren bevorzugten Ausführungsform des erfindungsgemäßen Ventilkäfigs vorgesehen, dass - ausgehend von ihren innenkonturseitigen Eintrittsöffnungen zu den außenkonturseitigen Austrittsöffnungen - die Drosselkanäle einen gekrümmten Verlauf aufweisend ausgebildet sind.

Vorzugsweise weisen die Drosselkanäle einen kreisförmigen Kanalquerschnitt auf. Denkbar sind aber auch von einer Kreisform abweichende Kanalquerschnitte, insbesondere ovale oder polygonale mit abgerundeten Ecken.

Eine weitere besonders bevorzugte Ausführungsform des erfindungsgemäßen Ventilkäfigs zeichnet sich dadurch aus, dass die Drosselkanäle ausgehend von den Eintrittsöffnungen zu den Austrittsöffnungen einen kontinuierlich abnehmenden Kanalquerschnitt aufweisend ausgebildet sind. Der kontinuierlich abnehmende Kanalquerschnitt hat den Effekt, dass beim Durchströmen die Prozessfluidgeschwindigkeit steigt. Da der Coanda-Effekt mit der Strömungsgeschwindigkeit korreliert (=> je höher die Strömungsgeschwindigkeit desto ausgeprägter der Coanda-Effekt), ist hierdurch in vorteilhafter Weise eine optimierte Ausnutzung des Coanda-Effekts ermöglicht.

Vorzugsweise sind die Drosselkanäle jeweils in eine Abströmrichtung gebogen ausgebildet, wobei insbesondere eine Strömungsrichtung von Prozessfluid an einer Eintrittsöffnung eines Drosselkanals verschieden von einer Strömungsrichtung an einer Austrittsöffnung des jeweiligen Drosselkanals ausgebildet ist. Beispielsweise weisen die Drosselkanäle einen Knick oder eine gebogene, insbesondere teilkreisförmige oder teilelliptische, Grundform auf. Bevorzugt weisen die Drosselkanäle jeweils im Bereich ihrer Austrittsöffnung eine im Wesentlichen gerade bzw. gleichmäßig gebogene Form auf, die insbesondere im Wesentlichen einer Form bzw. einer Krümmung des an die jeweilige Austrittsöffnung angrenzenden Außenkonturabschnitts entspricht. Es ist denkbar, dass die Drosselkanäle jeweils im Bereich ihrer Eintrittsöffnung eine gebogene, sich windende, beispielsweise schraubenförmige oder sinusförmige, oder eine andere komplexere Form, insbesondere zu einer Optimierung des Strömungsverhaltens, aufweisen.

Des Weiteren wird vorgeschlagen, dass die Drosselkanäle eine im Wesentlichen gleiche Länge aufweisen. Es kann ein auf die Drosselkanäle vorteilhaft gleichmäßig verteilter Strömungswiderstand erreicht werden. Dadurch kann ein vorteilhaftes Durchflussverhalten von Prozessfluid durch den Ventilkäfig, insbesondere die Drosselkanäle, ermöglicht werden. Insbesondere enspricht die Länge der Drosselkanäle jeweils einer vorgesehenen Strecke für durch den jeweiligen Drosselkanal strömendes Prozessfluid mittig durch den jeweiligen Drosselkanal von der Eintrittsöffnung des jeweiligen Drosselkanals zu der Austrittsöffnung des jeweiligen Drosselkanals. Vorzugsweise ist die Länge der Drosselkanäle mindestens größer als eine Wandstärke des Ventilkäfigs, vorzugsweise zumindest im Bereich der Drosselkanäle, welche sich insbesondere im Wesentlichen senkrecht zur axialen Richtung bzw. radial zu einer Mittelachse des Ventilkäfigs erstreckt.

Zudem wird vorgeschlagen, dass der Ventilkäfig eine im Wesentlichen hohlzylindrische Grundform mit einer entlang einer, insbesondere der vorher genannten, axialen Richtung a betrachtet zumindest im Wesentlichen kreisförmigen Außenkontur aufweist, wobei die Austrittsöffnungen der Drosselkanäle und/oder die jeweils als Abrisskante wirkenden Stufen entlang der axialen Richtung (a) betrachtet im Wesentlichen auf der Außenkontur des Ventilkäfigs angeordnet sind. Es kann ein vorteilhaftes Strömungsverhalten von Prozessfluid ermöglicht werden, welches nach den Drosselkanälen um den Ventilkäfig geführt wird. Es kann eine vorteilhaft gleichmäßige Belastung und Abnutzung des Ventilkäfigs erreicht werden. Insbesondere weisen die Außenkonturabschnitte jeweils eine von der zumindest im Wesentlichen kreisförmigen Außenkontur des Ventilkäfigs verschiedene Krümmung auf. Darunter, dass "die Austrittsöffnungen der Drosselkanäle und/oder die jeweils als Abrisskante wirkenden Stufen entlang der axialen Richtung (a) betrachtet im Wesentlichen auf der Außenkontur des Ventilkäfigs angeordnet" sind soll insbesondere verstanden werden, dass die Austrittsöffnungen und/oder Stufen jeweils in einer sich senkrecht zur axialen Richtung erstreckenden Ebene zur Außenkontur des Ventilkäfigs bezüglich eines Mittelpunkts der zumindest im Wesentlichen kreisförmigen Außenkontur einen minimalen radialen Abstand aufweisen, der höchstens 10 %, vorzugsweise höchstens 5 % und besonders bevorzugt höchstens 3 %, eines Radius der Außenkontur entspricht.

Ferner wird vorgeschlagen, dass die Drosselkanäle jeweils in eine Abströmrichtung gebogen ausgebildet sind, wobei der Ventilkäfig zumindest eine an einer in Abströmrichtung ausgebildeten Außenseite des Ventilkäfigs angeordnete Abströmkante aufweist, die entlang einer, insbesondere der vorher genannten, Umfangsrichtung u betrachtet zumindest einen der Außenkonturabschnitte begrenzt und beabstandet von den Stufen angeordnet ist, wobei die Abströmkante vorzugsweise dazu vorgesehen ist, ein Abreißen einer entlang des jeweiligen Außenkonturabschnitts geführten Strömung in Abströmrichtung zu bewirken. Es kann eine ungewollte Wirbelbildung im Prozessfluid an der in Abströmrichtung ausgebildeten Außenseite vorteilhaft verhindert werden, welche potentiell durch die an den Außenkonturabschnitten aufeinander geführten Strömungen entstehen kann. Es kann eine vorteilhaft gerichtete Führung von außen am Ventilkäfig geführtem Prozessfluid in Richtung des Ventilauslasses erreicht werden. Insbesondere entspricht die Abströmrichtung der Strömungsrichtung eines Prozessfluids, insbesondere nach einem Durchströmen des Ventilkäfigs, auf dem Weg von dem Ventilkäfig weg zum Ventilauslass hin. Vorzugsweise ist die Abströmrichtung im Wesentlichen parallel zur Symmetrieachse bzw. im Wesentlichen senkrecht zur axialen Richtung ausgerichtet. Bevorzugt ist die in Abströmrichtung ausgebildete Außenseite des Ventilkäfigs die Seite des Ventilkäfigs, die, insbesondere in einem montierten Zustand des Ventilkäfigs, dem Ventilauslass zugewandt ist. Bevorzugt erstreckt sich die an der Außenseite angeordnete Abströmkante entlang der axialen Richtung zumindest über einen Bereich des Ventilkäfigs, welcher die Austrittsöffnungen der Drosselkanäle umfasst. Vorzugsweise erstreckt sich die Abströmkante über eine im Wesentlichen vollständige Länge der Abströmkante und/oder entlang der axialen Richtung zumindest im Bereich der Austrittsöffnungen zumindest im Wesentlichen gerade und/oder zumindest im Wesentlichen parallel zur axialen Richtung. Bevorzugt ist die Abströmkante, insbesondere entlang der axialen Richtung betrachtet, im Wesentlichen auf der Symmetrieachse angeordnet oder der Ventilkäfig weist mehr als eine Abströmkante, beispielsweise zwei oder drei Abströmkanten, auf, die bezüglich der Symmetrieachse symmetrisch an der Außenseite angeordnet sind. Bei einer Ausgestaltung des Ventilkäfigs mit einer Abströmkante, die im Wesentlichen auf der Symmetrieachse angeordnet ist, beispielsweise mit einer Abströmkante oder drei bzw. einer ungeraden Anszahl an Abströmkanten, ist denkbar, dass der Ventilkäfig an der Außenseite im Wesentlichen tropfenförmig ausgebildet ist, wobei Seitenflächen des Ventilkäfigs, die insbesondere bündig aus angrenzenden Außenkonturabschnitten herauslaufen, zur der Abströmkante hin zusammenlaufen.

Des Weiteren wird vorgeschlagen, dass der Ventilkäfig zwei an der in Abströmrichtung ausgebildeten Außenseite des Ventilkäfigs angeordnete Abströmkanten aufweist, die entlang der Umfangsrichtung u betrachtet jeweils einen der Außenkonturabschnitte begrenzen und zusammen, insbesondere an zwei gegenüberliegenden Seiten, eine Außenfläche des Ventilkäfigs begrenzen, die über die zwei Abströmkanten von den Außenkonturabschnitten abgewinkelt ausgebildet ist. Es kann eine ungewollte Wirbelbildung im Prozessfluid an der in Abströmrichtung ausgebildeten Außenseite vorteilhaft verhindert werden, welche potentiell durch die an den Außenkonturabschnitten aufeinander geführten Strömungen entstehen kann, insbesondere da die an den verschiedenen Seiten des Ventilkäfigs geführten Strömungen an den zwei Abströmkanten getrennt voneinander vom Ventilkäfig weggeführt werden. Es kann eine vorteilhaft gerichtete Führung von außen am Ventilkäfig geführtem Prozessfluid in Richtung des Ventilauslasses erreicht werden, wobei zudem eine vorteilhaft kompakte Ausgestaltung des Ventilkäfigs erreicht werden kann. Bevorzugt erstrecken sich die zwei an der Außenseite angeordneten Abströmkanten jeweils entlang der axialen Richtung zumindest über einen Bereich des Ventilkäfigs, welcher die Austrittsöffnungen der Drosselkanäle umfasst. Vorzugsweise erstrecken sich die zwei Abströmkanten jeweils über eine im Wesentlichen vollständige Länge der jeweiligen Abströmkante und/oder entlang der axialen Richtung zumindest im Bereich der Austrittsöffnungen zumindest im Wesentlichen gerade und/oder zumindest im Wesentlichen parallel zur axialen Richtung. Insbesondere sind die zwei Abströmkanten, bevorzugt zumindest im Bereich der Austrittsöffnungen, zumindest im Wesentlichen parallel zueinander ausgebildet. Bevorzugt weisen die zwei Abströmkanten entlang der axialen Richtung betrachtet einen im Wesentlichen gleichen minimalen Abstand zur Symmetrieachse auf. Bevorzugt weist die Außenfläche, insbesondere entlang der axialen Richtung betrachtet, eine von den zwei angrenzenden Außenkonturabschnitten verschiedene Form bzw. Krümmung auf. In einer bevorzugten Ausgestaltung ist die Außenfläche im Wesentlichen eben ausgebildet. Vorzugsweise erstreckt sich die Außenfläche im Wesentlichen senkrecht zur Symmetrieachse des Ventilkäfigs. Insbesondere in einer Ausgestaltung des Ventilkäfigs mit mehr als zwei Abströmkanten ist denkbar, dass der Ventilkäfig mehr als eine Außenfläche umfasst, die bevorzugt jeweils entlang der axialen Richtung betrachtet zwischen zwei der Abströmkanten angeordnet sind. Es ist denkbar, dass zwei der Außenflächen den oben genannten Seitenflächen des Ventilkäfigs entsprechen, welche zu einer der Abströmkanten tropfenförmig zusammenlaufen.

Zudem wird vorgeschlagen, dass der Ventilkäfig zumindest einen weiteren Drosselkanal umfasst, welcher im Wesentlichen symmetrisch zu einer, insbesondere der vorher genannten, Symmetrieachse des Ventilkäfigs ausgebildet ist und beabstandet von den Stufen und den Drosselkanälen angeordnet ist, wobei sich der zumindest eine weitere Drosselkanal von einer Innenseite des Ventilkäfigs bis zu einer, insbesondere der vorher genannten, in Abströmrichtung ausgebildeten Außenseite des Ventilkäfigs erstreckt, wobei der zumindest eine weitere Drosselkanal vorzugweise dazu vorgesehen ist, eine in Abströmrichtung gerichtete Strömung zu erzeugen. Es kann eine vorteilhaft gerichtete Führung von außen am Ventilkäfig geführtem Prozessfluid in Richtung des Ventilauslasses erreicht werden, da von zwei Seiten an den Außenkonturabschnitten geführtes Prozessfluid durch über den weiteren Drosselkanal geleitetes Prozessfluid in Richtung des Ventilauslasses mitgeführt werden kann. Es ist denkbar, dass der Ventilkäfig einen oder mehrere weitere Drosselkanäle umfasst. Darunter, dass der/die Drosselkanal/Drosselkanäle "im Wesentlichen symmetrisch zur Symmetrieachse des Ventilkäfigs" ausgebildet ist/sind, soll insbesondere verstanden werden, dass ein den/die weiteren Drosselkanal/Drosselkanäle ausbildendes, insbesondere von dem Grundkörper des Ventilkäfig begrenztes, Volumen des/der weiteren Drosselkanals/Drosselkanäle entlang der axialen Richtung betrachtet gleichmäßig auf beide Seiten der Symmetrieachse verteilt angeordnet ist. Beispielsweise umfasst der Ventilkäfig einen weiteren Drosselkanal, der entlang der axialen Richtung betrachtet im Wesentlichen auf der bzw. um die Symmetrieachse verläuft, zwei weitere Drosselkanäle, die entlang der axialen Richtung betrachtet einen im Wesentlichen gleichen minimalen Abstand zur Symmetrieachse aufweisen, oder drei weitere Drosselkanäle, wobei einer der drei weiteren Drosselkanäle entlang der axialen Richtung betrachtet im Wesentlichen auf der bzw. um die Symmetrieachse verläuft und zwei der drei weiteren Drosselkanäle entlang der axialen Richtung betrachtet einen im Wesentlichen gleichen minimalen Abstand zur Symmetrieachse aufweisen. In einer bevorzugten Ausgestaltung weisen der zumindest eine/die weitere(n) Drosselkanal/Drosselkanäle und die Drosselkanäle eine im Wesentlichen gleiche Länge auf. Insbesondere ist denkbar, dass der zumindest eine weitere Drosselkanal eine gebogene, gewundene, beispielsweise schraubenförmige, eine geknickte oder eine sinusförmige Grundform aufweist. Es ist aber auch denkbar, dass der zumindest eine weitere Drosselkanal zumindest im Wesentlichen gerade ausgebildet ist. Beispielsweise ist denkbar, dass der Ventilkäfig im Bereich der Außenseite bzw. des zumindest einen weiteren Drosselkanals eine größere Wandstärke aufweist, wie in einem Bereich, in dem die Drosselkanäle angeordnet sind. Der zumindest eine weitere Drosselkanal weist vorzugsweise eine Eintrittsöffnung und eine Austrittsöffnung auf. Alternativ ist denkbar, dass der zumindest eine weitere Drosselkanal mehr als eine Eintrittsöffnung und/oder mehr als eine Austrittsöffnung aufweist, wobei insbesondere eine mittlere Länge durch den weiteren Drosselkanal im Wesentlichen einer Länge der Drosselkanäle entspricht. Insbesondere ist/sind die Austrittsöffnung(en) des zumindest einen weiteren Drosselkanals an der Außenseite, vorzugsweise an der/einer, insbesondere vorher genannten, Außenfläche des Ventilkäfigs, angeordnet. Alternativ oder zusätzlich ist denkbar, dass eine Austrittsöffnung eines/des weiteren Drosselkanals zumindest eine Abströmkante ausbildet, wobei insbesondere die Austrittsöffnung an zumindest einen der Außenkonturabschnitte grenzt.

Eine nicht-beanspruchte Ausführungsform sieht vor, dass der Ventilkäfig schichtweise, durch ein additives Herstellungsverfahren, insbesondere durch ein Lasersinterverfahren oder ein Laserschmelzverfahren, hergestellt wird, gemäß dem ein selektiver Materialauftragungsvorgang oder ein selektiver Materialaushärtungsvorgang anhand der vorgegebenen geometrischen Daten des Ventilkegels gesteuert wird. Durch die Herstellung des Ventilkegels mittels eines additiven Herstellungsverfahrens sind neben einer schnellen Herstellung (es entfällt die zeitintensive Entwicklung/Herstellung von Werkzeugen/Formen), auch komplexe Geometrien bzw. Strukturen einfach und kostengünstig zu realisieren.

Eine alternative, nicht-beanspruchte Ausführungsform sieht vor, dass der Ventilkäfig durch ein Gussverfahren hergestellt ist.

Bevorzugt ist der Ventilkäfig aus Metall bzw. aus einer Metalllegierung hergestellt.

Der Erfindung liegt des Weiteren die Aufgabe zugrunde ein Stellventil für eine verfahrenstechnische Anlage gemäß der im Oberbegriff des Anspruches 15 angegebenen Art derart weiterzubilden, dass ein in Bezug auf Kavitation und Verschleiß optimierter Betrieb des Stellventils ermöglicht ist.

Diese Aufgabe wird durch die kennzeichnenden Merkmale des Anspruches 15 in Verbindung mit seinen Oberbegriffsmerkmalen gelöst.

In bekannter Art und Weise umfasst das Stellventil ein Ventilgehäuse mit einem Ventileinlass und einem Ventilauslass, einen zwischen dem Ventilein- und Ventilauslass angeordneten Ventilkäfig sowie ein im Ventilgehäuse verfahrbar gelagertes, mit dem Ventilkäfig zusammenwirkendes Ventilglied.

Erfindungsgemäß ist nunmehr vorgesehen, dass der Ventilkäfig nach einem der Ansprüche 1 bis 14 ausgebildet ist.

Da aufgrund der Ausbildung des Ventilkäfig nunmehr das aus den Austrittsöffnungen des Ventilkäfig austretende Prozessfluid enganliegend um den Ventilkäfig strömt, ist sichergestellt, dass die Prozessfluidströme nicht mehr normal bzw. senkrecht auf die umliegende Wandung des Ventilgehäuses prallen, sodass die Aufprallenergie der Prozessfluidströme beim Auftreffen auf die Gehäusewandung deutlich reduziert ist, was wiederum in vorteilhafter Weise eine reduzierte Kavitations- und Verschleißneigung zur Folge hat.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:

Fig. 1    ein Stellventil mit einem erfindungsgemäßen Ventilkäfig in einer Schnittdarstellung,

Fig. 2    einen Querschnitt des Stellventils aus Fig. 1;

Fig. 3    eine Ansicht schräg von oben auf den Drosselbereich eines erfindungsgemäßen Ventilkäfigs gemäß einer ersten Ausführungsform;

Fig. 4    eine vergrößerte Darstellung des mit A bezeichneten Bereichs aus Fig. 3;

Fig. 5    eine Ansicht schräg von oben auf den Drosselbereich eines erfindungsgemäßen Ventilkäfig gemäß einer zweiten Ausführungsform,

Fig. 6    eine vergrößerte Darstellung des mit B bezeichneten Bereichs aus Fig. 5, und

Fig. 7    ein Querschnitt des Stellventils aus Figur 1 mit einem erfindungsgemäßen Ventilkäfig gemäß einer dritten Ausführungsform.

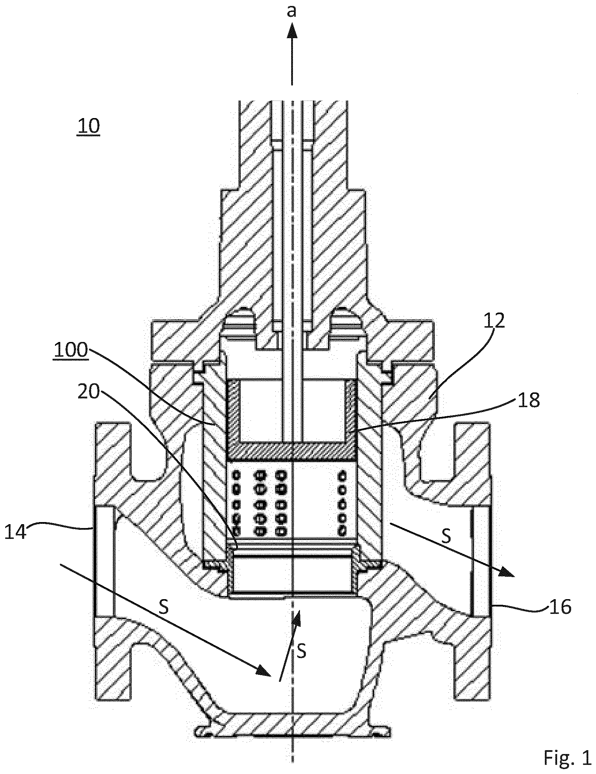

Fig. 1 zeigt ein insgesamt mit der Bezugsziffer 10 bezeichnetes Stellventil für eine verfahrenstechnische Anlage. Das Stellventil 10 umfasst ein Ventilgehäuse 12 mit einem Ventileinlass 14 und einem Ventilauslass 16, ein im Ventilgehäuse 12 des Stellventils 10 in axialer Richtung a verfahrbar gelagertes Ventilglied 18 sowie einen im Strömungskanal des Ventilgehäuses 12, also zwischen Ventileinlass 14 und Ventilauslass 16 angeordneten, im Wesentlichen hülsen- bzw. zylinderförmigen Ventilkäfig 100. Derartige, einen Ventilkäfig aufweisende Stellventile werden auch als Käfigventil bezeichnet.

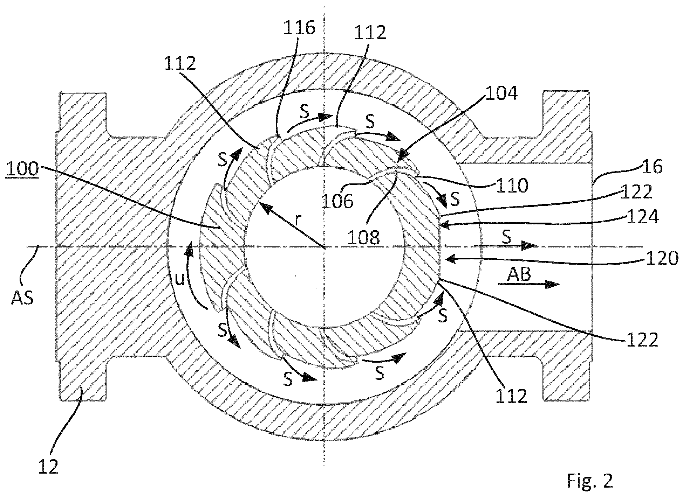

Der hülsen- bzw. zylinderförmig ausgebildete Ventilkäfig 100 umfasst einen in axialer Richtung a betrachtet oberen, das Ventilglied 18 axial führenden Führungsbereich sowie einen darunterliegenden Drosselbereich mit mehreren, in axialer Richtung a und in Umfangsrichtung u betrachtet verteilt angeordneten, die Wandung des Ventilkäfigs 100 durchdringende Drosselkanäle 104, vgl. Fig. 2. Wie Fig. 2 weiter zu entnehmen ist, weist dabei jeder Drosselkanal 104 eine mit der Bezugsziffer 106 bezeichnete innenkonturseitige Eintrittsöffnung, einen mit der Bezugsziffer 108 bezeichneten Kanalabschnitt sowie einen mit der Bezugsziffer 110 bezeichnete außenkonturseitige Austrittsöffnung auf.

Wie in Fig. 1 und in Fig. 2 durch die die Strömungsrichtung S symbolisierenden Pfeile ersichtlich, tritt ein Prozessfluid über den Ventileinlass 14 in das Stellventil 10 ein und strömt über die untere Stirnfläche in das Innere des Ventilkäfigs 100. Über die innenkonturseitigen Eintrittsöffnungen 106 gelangt das Prozessfluid in die Kanalabschnitte 108 und tritt im Anschluss über die außenkonturseitigen Austrittsöffnungen 110 aus den Drosselkanälen 104 und damit dem Ventilkäfig 100 wieder aus, um anschließend aus dem Ventilauslass 16 aus dem Stellventil 10 wieder auszuströmen.

Über eine entsprechende axiale Positionierung des Ventilglieds 18 in Bezug zum Ventilkäfig 100 kann somit in bekannter Art und Weise die Anzahl der verschlossenen bzw. geöffneten Drosselkanäle 104, also die Öffnungsweite des Ventilkäfigs 100 und damit die Drosselquote eingestellt werden.

Zum vollständigen Schließen des Stellventils 10, umfasst das Stellventil 10 ferner einen mit dem Ventilglied 18 zusammenwirkenden, komplementär zum Ventilglied 18 ausgebildeten Ventilsitz 20.

Ein bekanntes Problem derartiger, einen Ventilkäfig 100 aufweisender Stellventile 10 ist, dass zur Verringerung der Kavitationsneigung und des Verschleißes, ein senkrechtes bzw. normales Auftreffen der aus den Austrittsöffnungen 110 austretenden Prozessfluidströmungen auf die umliegende Wandung des Ventilgehäuses 12 möglichst vermieden werden sollte.

Wie aus Fig. 2, Fig. 3 und Fig. 5 ersichtlich, ist hierzu erfindungsgemäß vorgesehen, dass die äußere Mantelfläche des Ventilkäfigs 100 gestuft ausgebildet ist, d.h. dass in Umfangsrichtung u betrachtet der Ventilkäfig 100 mehrere bogenförmig ausgebildete Außenkonturabschnitte 112 aufweist, die jeweils über eine in Strömungsrichtung S als eine Abrisskante wirkende Stufe 114 voneinander getrennt sind. Zudem sind - wie aus Fig. 2, Fig. 3 und Fig. 5 weiter ersichtlich - die Drosselkanäle 104 derart verlaufend angeordnet, dass die außenkonturseitigen Austrittsöffnungen 110 der Drosselkanäle 104 jeweils in den Stufen 114, in axialer Richtung a eine Reihe bildend, liegen bzw. angeordnet sind.

Dieser Ausgestaltung erweist sich als besonders vorteilhaft, da nunmehr aufgrund des Coanda-Effekts die Prozessfluidströmungen nach Austritt aus den Austrittsöffnungen 110 zunächst bogenförmig bis zur jeweiligen stromabwärtigen Stufe 114 geführt werden. Mit anderen Worten, die Prozessfluidströmungen folgen dem jeweiligen bogenförmigen Außenkonturabschnitt 112. Die anschließende als Abrisskante wirkende Stufe 114 bewirkt dann ein bewusstes Abreißen der Strömung, sodass Verwirbelungen durch sich kreuzende Prozessfluidströmungen verhindert werden. Somit ist in vorteilhafter Weise neben einer verwirbelungsreduzierten Strömungsführung insbesondere auch eine in Bezug zur äußeren Mantelfläche des Ventilkegels zu 100 enganliegende Umströmung des Ventilkegels 100 gewährleistet ist.

Wie aus Fig. 2, Fig. 3 und Fig. 5 ersichtlich, sind vorliegend n=8 bogenförmig ausgebildete Außenkonturabschnitte 112 und n=8 Stufen 114 vorgesehen. Zudem sind, wie insbesondere aus Fig. 2 ersichtlich, die Drosselkanäle 104 so ausgebildet, dass diese ausgehend von ihren innenkonturseitigen Eintrittsöffnungen 106 zu den außenkonturseitigen Austrittsöffnungen 110 einen gekrümmten Verlauf aufweisen. Vorteilhaft an dieser Ausgestaltung ist, dass nunmehr die aus den außenkonturseitigen Austrittsöffnungen 110 austretenden Prozessfluidströme bereits einen gekrümmten, dem bogenförmigen Außenkontur Abschnitt 112 im Wesentlichen entsprechenden Strömungsverlauf aufweisen.

Zudem ist, wie Fig. 2 weiter zeigt, der Ventilkäfig 100 achsensymmetrisch zu der mit AS bezeichneten Symmetrieachse ausgebildet. D.h. - wie aus der Draufsicht aus Fig. 2 ersichtlich - der Ventilkäfig 100 weist zwei identische Hälften auf, nämlich eine - bezogen auf die Draufsicht gemäß Fig. 2 - obere und untere Hälfte. Dies wiederum hat den Effekt, dass Prozessfluid, welches in der oberen Hälfte aus den Austrittsöffnungen 110 austritt, im Uhrzeigersinn um den Ventilkäfig 100 herumgeführt wird, während Prozessfluid, welches aus der unteren Hälfte aus den Austrittsöffnung 110 austritt, gegen den Uhrzeigersinn um den Ventilkäfig 100 herumgeführt wird. Somit ist sichergestellt, dass das aus den Austrittsöffnungen 110 austretenden Prozessfluid stets auf dem kürzesten Weg um den Ventilkäfig 100 geführt wird.

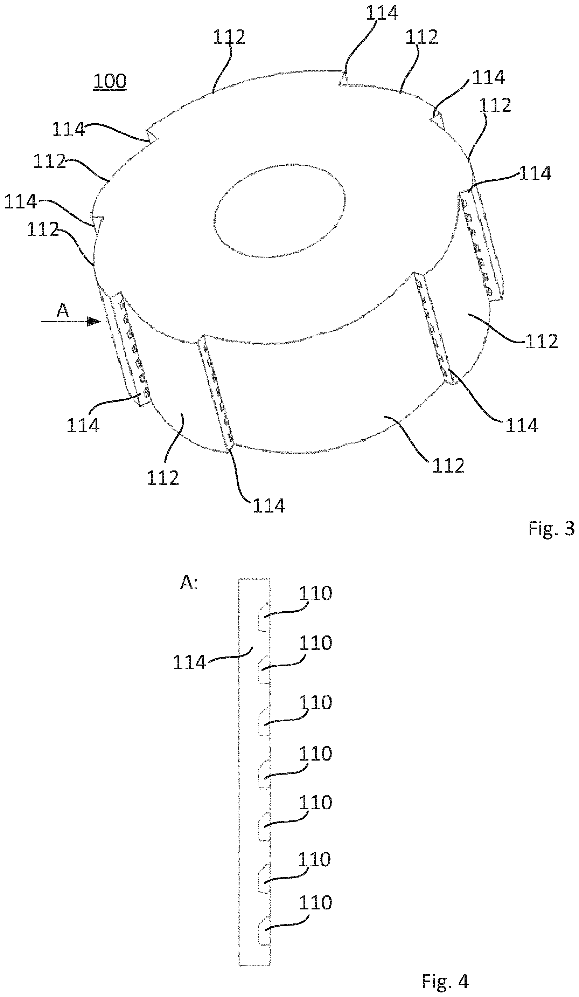

Um ein nahezu tangentiales Ausströmen entlang des angrenzenden bogenförmigen Außenkonturabschnitts 112 zu gewährleisten und damit eine optimale Ausnutzung des Coanda-Effekts zu ermöglichen, sind gemäß der ersten Ausführungsform, vgl. Fig. 3 und Fig. 4, die jeweils in einer Reihe angeordneten Austrittsöffnungen 110 derart ausgebildet, dass die Austrittsöffnungen 110 tangential angrenzend an den in Strömungsrichtung S betrachtet sich anschließenden bogenförmigen Außenkonturabschnitt 112 ausgerichtet sind.

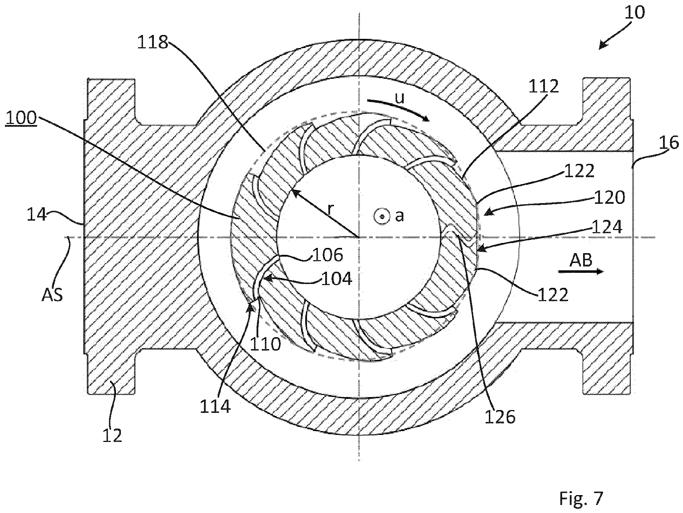

Die Drosselkanäle 104 des Ventilkäfigs 100 weisen alle, insbesondere trotz leicht verschiedener Grundformen, eine im Wesentlichen gleiche Länge auf (siehe insbesondere Figuren 2 und 7). Die Länge der Drosselkanäle 104 ist größer als eine mittlere Wandstärke des Ventilkäfigs 100 und als eine Wandstärke des Ventilkäfigs 100 im Bereich der Drosselkanäle 104. Die Wandstärke des Ventilkäfigs 100 erstreckt sich im Wesentlichen senkrecht zur axialen Richtung a bzw. radial zu einer Mittelachse des Ventilkäfigs 100.

Der Ventilkäfig 100 weist eine im Wesentlichen hohlzylindrische Grundform mit einer entlang einer axialen Richtung a betrachtet zumindest im Wesentlichen kreisförmigen Außenkontur 118 auf, wobei die Austrittsöffnungen 110 der Drosselkanäle 104 und die jeweils als Abrisskante wirkenden Stufen 114 entlang der axialen Richtung a betrachtet im Wesentlichen auf der Außenkontur 118 des Ventilkäfigs 100 angeordnet sind. Die Außenkonturabschnitte 112 weisen jeweils eine von der zumindest im Wesentlichen kreisförmigen Außenkontur 118 des Ventilkäfigs 100 verschiedene Krümmung auf. Die Austrittsöffnungen 110 und/oder die Stufen 114 weisen jeweils in einer sich senkrecht zur axialen Richtung a erstreckenden Ebene zur Außenkontur 118 des Ventilkäfigs 100 bezüglich eines Mittelpunkts der zumindest im Wesentlichen kreisförmigen Außenkontur 118 einen minimalen radialen Abstand auf, der höchstens 10 %, vorzugsweise höchstens 5 % und besonders bevorzugt höchstens 3 %, eines Radius der Außenkontur 118 entspricht.

In Figur 2 ist der Ventilkäfig 100 mit zwei Abströmkanten 122 und einer durch die zwei Abströmkanten 122 begrenzten Außenfläche 124 gezeigt, welche insbesondere in den Figuren 3 bis 6 nicht gezeigt sind. Die Drosselkanäle 104 sind jeweils in eine Abströmrichtung AB gebogen ausgebildet, wobei der Ventilkäfig 100 die zwei an der in Abströmrichtung AB ausgebildeten Außenseite 120 des Ventilkäfigs 100 angeordnete Abströmkante 122 aufweist. Die zwei Abströmkanten 122 begrenzen entlang der Umfangsrichtung u betrachtet jeweils einen der Außenkonturabschnitte 112. Die zwei Abströmkanten 122 sind jeweils beabstandet von den Stufen 114 angeordnet. Die Abströmkanten 122 sind dazu vorgesehen, ein Abreißen einer entlang des an die jeweilige Abströmkante 122 grenzenden Außenkonturabschnitts 112 geführten Strömung in Abströmrichtung AB zu bewirken. Die zwei Abströmkanten 122 begrenzen zusammen, insbesondere an zwei gegenüberliegenden Seiten, die Außenfläche 124 des Ventilkäfigs 100, die über die zwei Abströmkanten 122 von den Außenkonturabschnitten 112 abgewinkelt ausgebildet ist. Die Außenfläche 124 ist an der in Abströmrichtung AB ausgebildeten Außenseite 120 des Ventilkäfigs angeordnet. Die Abströmrichtung AB entspricht der Strömungsrichtung eines Prozessfluids, insbesondere nach einem Durchströmen des Ventilkäfigs 100, auf dem Weg von dem Ventilkäfig 100 weg zum Ventilauslass 16 hin. Die Abströmrichtung AB ist im Wesentlichen parallel zur Symmetrieachse AS und im Wesentlichen senkrecht zur axialen Richtung a ausgerichtet. Die in Abströmrichtung AB ausgebildete Außenseite 120 des Ventilkäfigs 100 ist die Seite des Ventilkäfigs 100, die, insbesondere in einem montierten Zustand des Ventilkäfigs 100 (siehe Figur 2), dem Ventilauslass 16 zugewandt ist. Die an der Außenseite 120 angeordneten Abströmkanten 122 erstrecken sich jeweils entlang der axialen Richtung a zumindest über einen Bereich des Ventilkäfigs 100, welcher die Austrittsöffnungen 110 der Drosselkanäle 104 umfasst. Die zwei Abströmkanten 122 erstrecken sich jeweils über eine im Wesentlichen vollständige Länge der jeweiligen Abströmkante 122 und/oder entlang der axialen Richtung a zumindest im Bereich der Austrittsöffnungen 110 zumindest im Wesentlichen gerade und zumindest im Wesentlichen parallel zur axialen Richtung a. Die zwei Abströmkanten 122 sind bezüglich der Symmetrieachse AS symmetrisch an der Außenseite 120 angeordnet. Die zwei Abströmkanten 122 sind, bevorzugt zumindest im Bereich der Austrittsöffnungen 110, im Wesentlichen parallel zueinander ausgebildet. Die zwei Abströmkanten 122 weisen entlang der axialen Richtung a betrachtet einen im Wesentlichen gleichen minimalen Abstand zur Symmetrieachse AS auf. Die Außenfläche 124 weist, insbesondere entlang der axialen Richtung a betrachtet, eine von den zwei angrenzenden Außenkonturabschnitten 112 verschiedene Form bzw. Krümmung auf. Die Außenfläche 124 ist im Wesentlichen eben ausgebildet. Alternativ ist denkbar, dass die Außenfläche 124 ebenfalls gebogen ausgebildet ist. Die Außenfläche 124 erstreckt sich im Wesentlichen senkrecht zur Symmetrieachse AS des Ventilkäfigs 100. Alternativ sind auch Ausgestaltungen des Ventilkäfigs 100 denkbar, wobei der Ventilkäfig 100 lediglich eine Abströmkante 122, insbesondere ohne die Außenfläche 124, oder mehr als zwei Abströmkanten 122 aufweist.

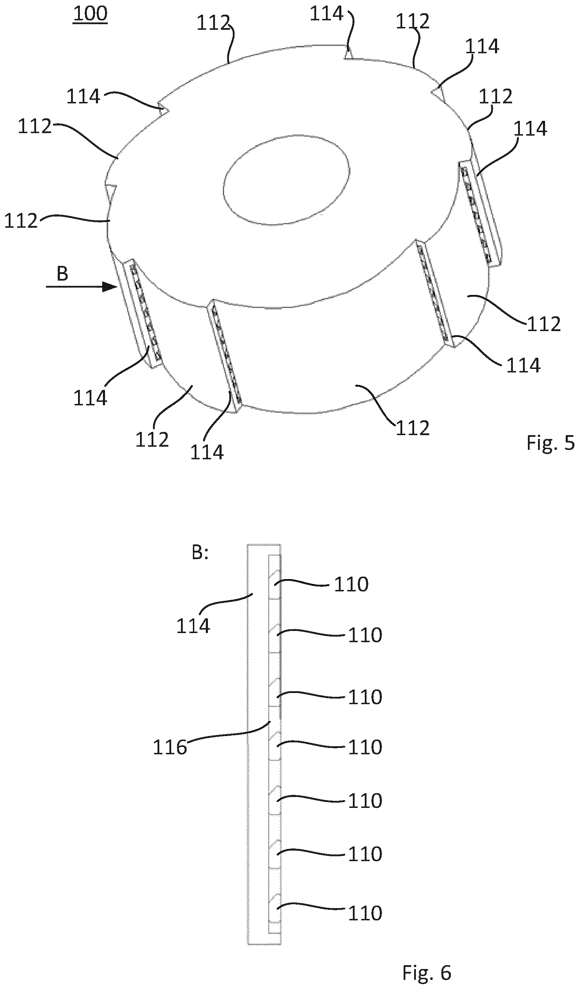

Gemäß der zweiten Ausführungsform, vgl. Fig. 5 und Fig. 6, ist in der Stufe 114 ein sich in axialer Richtung a erstreckender Schlitz 116 ausgebildet, in den die in einer Reihe angeordneten Austrittsöffnungen 110 der Drosselkanäle 104 münden. Um auch in diesem Fall ein nahezu tangentiales Ausströmen entlang des angrenzenden bogenförmigen Außenkonturabschnitts 112 zu gewährleisten und damit eine optimale Ausnutzung des Coanda-Effekts zu ermöglichen, ist der Schlitz 116 so ausgebildet ist, dass dieser tangential angrenzend an den in Strömungsrichtung S betrachtet sich anschließenden bogenförmigen Außenkonturabschnitt 112 ausgerichtet ist.

In Figur 7 ist ein Stellventil 10 mit einem Ventilkäfig 100 gemäß einer dritten Ausführungsform gezeigt. Der in Figur 7 gezeigte Ventilkäfig 100 ist im Wesentlichen identisch zu dem in Figur 2 gezeigten Ventilkäfig 100 ausgebildet. Der in Figur 7 gezeigte Ventilkäfig 100 unterscheidet sich von dem in Figur 2 gezeigten Ventilkäfig 100100 durch einen weiteren Drosselkanal 126. Der weitere Drosselkanal 126 ist im Wesentlichen symmetrisch zur Symmetrieachse SA des Ventilkäfigs 100 ausgebildet und ist beabstandet von den Stufen 114 und den Drosselkanälen 104 angeordnet. Der weitere Drosselkanal 126 erstreckt sich von einer Innenseite des Ventilkäfigs 100 bis zu der in Abströmrichtung AB ausgebildeten Außenseite 120 des Ventilkäfigs 100. Der weitere Drosselkanal 126 ist dazu vorgesehen, eine in Abströmrichtung AB gerichtete Strömung zu erzeugen, die insbesondere Prozessfluid in Richtung des Ventilauslasses 16 führt. Der weitere Drosselkanal 126 weist eine gewundene Grundform auf, Der weitere Drosselkanal 126 erstreckt sich im Wesentlichen sinusförmig von der Innenseite des Ventilkäfigs 100 zur Außenseite 120 hindurch. Der weitere Drosselkanal 126 erstreckt sich entlang der axialen Richtung a betrachtet im Wesentlichen um die bzw. entlang der Symmetrieachse AS. Der weitere Drosselkanal 126 weist im Wesentlichen die gleiche Länge auf wie die Drosselkanäle 104. Eine Austrittsöffnung des weiteren Drosselkanals 126 ist an der Außenseite 120, insbesondere an der Außenfläche 124 des Ventilkäfigs 100, angeordnet. Alternativ ist denkbar, dass der Ventilkäfig 100 mehrere weitere Drosselkanäle 126 umfasst. Beispielsweise ist denkbar, dass der Ventilkäfig 100 zwei weitere Drosselkanäle 126 umfasst, die entlang der axialen Richtung a betrachtet einen im Wesentlichen gleichen minimalen Abstand zur Symmetrieachse AS aufweisen, oder drei weitere Drosselkanäle 126, wobei einer der drei weiteren Drosselkanäle 126 entlang der axialen Richtung a betrachtet im Wesentlichen auf der bzw. um die Symmetrieachse AS verläuft und zwei der drei weiteren Drosselkanäle 126 entlang der axialen Richtung a betrachtet einen im Wesentlichen gleichen minimalen Abstand zur Symmetrieachse AS aufweisen. Alternativ oder zusätzlich ist denkbar, dass der weitere Drosselkanal 126 eine gebogene, gewundene, beispielsweise schraubenförmige oder eine geknickte Grundform aufweist. Es ist aber auch denkbar, dass der zumindest eine weitere Drosselkanal 126 zumindest im Wesentlichen gerade ausgebildet ist. Alternativ oder zusätzlich ist denkbar, dass eine Austrittsöffnung des weiteren Drosselkanals 126 eine Abströmkante 122 ausbildet, wobei insbesondere die Austrittsöffnung an zumindest einen der Außenkonturabschnitte 112 grenzt.

Bezugszeichenliste

| | |
|---|---|
| 10 | Stellventil |
| 12 | Ventilgehäuse |
| 14 | Ventileinlass |
| 16 | Ventilauslass |
| 18 | Ventilglied |
| 20 | Ventilsitz |
| 100 | Ventilkäfig |
| 104 | Drosselkanal |
| 106 | Eintrittsöffnung |
| 108 | Kanalabschnitt |
| 110 | Austrittsöffnung |
| 112 | bogenförmiger Außenkonturabschnitt |
| 114 | Stufe |
| 116 | Schlitz |
| 118 | Außenkontur |
| 120 | Außenseite |
| 122 | Abströmkante |
| 124 | Außenfläche |
| 126 | Weiterer Drosselkanal |

| | |
|---|---|
| a | axiale Richtung |
| r | radiale Richtung |
| u | Umfangsrichtung |
| S | Strömungsrichtung |
| AS | Symmetrieachse |
| AB | Abströmrichtung |

**Patentansprüche**

1. Ventilkäfig (100) für ein Stellventil (10), umfassend mehrere sich von einer Innenkontur des Ventilkäfigs (100) zu dessen Außenkontur hin erstreckende, den Ventilkäfig (100) durchdringende Drosselkanäle (104), wobei jeder Drosselkanal (104) in Strömungsrichtung (S) betrachtet eine innenkonturseitige Eintrittsöffnung (106) und eine außenkonturseitige Austrittsöffnung (110) aufweist, **dadurch gekennzeichnet, dass** in Umfangsrichtung (u) betrachtet der Ventilkäfig (100) mehrere bogenförmig ausgebildete Außenkonturabschnitte (112) aufweist, die jeweils über eine in Bezug zur Mantelfläche der Außenkonturabschnitte in radialer Richtung (r) ausgerichtete, als eine Abrisskante wirkende Stufe (114) voneinander getrennt sind, und dass die Drosselkanäle (104) derart verlaufend angeordnet sind, dass die außenkonturseitigen Austrittsöffnungen (110) der Drosselkanäle (104) in der Stufe (114) zwischen zwei Außenkonturabschnitte (112) angeordnet sind.

2. Ventilkäfig (100) nach Anspruch 1, **dadurch gekennzeichnet, dass** in der Stufe (114) zwischen zwei Außenkonturabschnitte (112) mehrere in axialer Richtung (a) in Reihe angeordnete Austrittsöffnungen (110) angeordnet sind.

3. Ventilkäfig (100) nach Anspruch 2, **dadurch gekennzeichnet, dass** die in einer Reihe angeordneten Austrittsöffnungen (110) jeweils tangential angrenzend an den in Strömungsrichtung (S) betrachtet sich anschließenden bogenförmigen Außenkonturabschnitt (112) ausgerichtet sind.

4. Ventilkäfig (100) nach Anspruch 2, **dadurch gekennzeichnet, dass** in der Stufe (114) ein sich in axialer Richtung (a) erstreckender Schlitz (116) ausgebildet ist, in den die in Reihe angeordneten Austrittsöffnungen (110) münden, wobei der Schlitz (116) tangential angrenzend an den in Strömungsrichtung (S) betrachtet sich anschließenden bogenförmigen Außenkonturabschnitt (112) ausgerichtet ist.

5. Ventilkäfig (100) nach einem der Ansprüche 1 bis 4, **dadurch gekennzeichnet, dass** in Umfangsrichtung (u) betrachtet der Ventilkäfig (100) eine gerade Anzahl (n) von Stufen und bogenförmig ausgebildeten Außenkonturabschnitten (112) aufweist.

6. Ventilkäfig (100) nach Anspruch 5, **dadurch gekennzeichnet, dass** die n-bogenförmigen Außenkonturabschnitte (112) und die n-Stufen (114) achsensymmetrisch zu einer senkrecht zur Erstreckungsrichtung des Ventilkäfigs (100) ausgerichteten Symmetrieachse (AS) angeordnet sind.

7. Ventilkäfig (100) nach einem der vorgenannten Ansprüche, **dadurch gekennzeichnet, dass** - ausgehend von ihren innenkonturseitigen Eintrittsöffnungen (106) zu den außenkonturseitigen Austrittsöffnungen (110) - die Drosselkanäle (104) einen gekrümmten Verlauf aufweisend ausgebildet sind.

8. Ventilkäfig (100) nach einem der vorgenannten Ansprüche, **dadurch gekennzeichnet, dass** die Drosselkanäle (104) ausgehend von den Eintrittsöffnungen (106) zu den Austrittsöffnungen (110) einen kontinuierlich abnehmenden Kanalquerschnitt aufweisend ausgebildet sind.

9. Ventilkäfig (100) nach einem der vorgenannten Ansprüche, **dadurch gekennzeichnet, dass** die Drosselkanäle (104) eine im Wesentlichen gleiche Länge aufweisen.

10. Ventilkäfig (100) nach einem der vorgenannten Ansprüche, **gekennzeichnet durch** eine im Wesentlichen hohlzylindrische Grundform mit einer entlang einer axialen Richtung (a) betrachtet zumindest im Wesentlichen kreisförmigen Außenkontur (118), wobei die Austrittsöffnungen (110) der Drosselkanäle (104) und/oder die jeweils als Abrisskante wirkenden Stufen (114) entlang der axialen Richtung (a) betrachtet im Wesentlichen auf der Außenkontur

(118) des Ventilkäfigs (100) angeordnet sind.

11. Ventilkäfig (100) nach einem der vorgenannten Ansprüche, **dadurch gekennzeichnet, dass** die Drosselkanäle (104) jeweils in eine Abströmrichtung (AB) gebogen ausgebildet sind, wobei der Ventilkäfig (100) zumindest eine an einer in Abströmrichtung (AB) ausgebildeten Außenseite (120) des Ventilkäfigs (100) angeordnete Abströmkante (122) aufweist, die entlang einer Umfangsrichtung (u) betrachtet zumindest einen der Außenkonturabschnitte (112) begrenzt und beabstandet von den Stufen (114) angeordnet ist, wobei die Abströmkante (122) vorzugsweise dazu vorgesehen ist, ein Abreißen einer entlang des jeweiligen Außenkonturabschnitts (112) geführten Strömung in Abströmrichtung (AB) zu bewirken.

12. Ventilkäfig (100) nach Anspruch 11, **gekennzeichnet durch** zwei an der in Abströmrichtung (AB) ausgebildeten Außenseite (120) des Ventilkäfigs (100) angeordnete Abströmkanten (122), die entlang der Umfangsrichtung (u) betrachtet jeweils einen der Außenkonturabschnitte (112) begrenzen und zusammen, insbesondere an zwei gegenüberliegenden Seiten, eine Außenfläche (124) des Ventilkäfigs (100) begrenzen, die über die zwei Abströmkanten (122) von den Außenkonturabschnitten (112) abgewinkelt ausgebildet ist.

13. Ventilkäfig (100) nach einem der vorgenannten Ansprüche, **gekennzeichnet durch** zumindest einen weiteren Drosselkanal (126), welcher im Wesentlichen symmetrisch zu einer Symmetrieachse (SA) des Ventilkäfigs (100) ausgebildet ist und beabstandet von den Stufen (114) und den Drosselkanälen (104) angeordnet ist, wobei sich der zumindest eine weitere Drosselkanal (126) von einer Innenseite des Ventilkäfigs (100) bis zu einer in Abströmrichtung (AB) ausgebildeten Außenseite (120) des Ventilkäfigs (100) erstreckt, wobei der zumindest eine weitere Drosselkanal (126) vorzugweise dazu vorgesehen ist, eine in Abströmrichtung (AB) gerichtete Strömung zu erzeugen.

14. Ventilkäfig (100) nach einem der vorgenannten Ansprüche, **dadurch gekennzeichnet, dass** der Ventilkäfig (100) aus einem metallischen Werkstoff hergestellt ist.

15. Stellventil (10), umfassend ein Ventilgehäuse (12) mit einem Ventileinlass (14) und einem Ventilauslass (16), einen zwischen dem Ventilein- und Ventilauslass (14, 16) angeordneten Ventilkäfig (100) sowie im Ventilgehäuse (12) verfahrbar gelagertes, mit dem Ventilkäfig (100) zusammenwirkendes Ventilglied (18), **dadurch gekennzeichnet, dass** der Ventilkäfig (100) nach einem der Ansprüche 1 bis 14 ausgebildet ist.

**Claims**

1. Valve cage (100) for a control valve (10), comprising a plurality of throttle channels (104) which extend from an inner contour of the valve cage (100) to its outer contour and penetrate the valve cage (100), each throttle channel (104) having, as viewed in the flow direction (S), an inlet opening (106) on its inner contour side and an outlet opening (110) on its outer contour side **characterized in that,** as viewed in the circumferential direction (u), the valve cage (100) has a plurality of arcuate outer contour sections (112) that are each separated from one another by a step (114) which is aligned in the radial direction (r) with respect to the lateral surface of the outer contour sections and which acts as a tear-off edge, and **in that** the throttle channels (104) are arranged to extend in such a way that the outlet openings (110) of the throttle channels (104) located on the outer contour side are arranged in the step (114) between two outer contour sections (112).

2. Valve cage (100) according to claim 1, **characterized in that** a plurality of outlet openings (110) which are arranged in a row in the axial direction (a) are arranged in the step (114) between two outer contour sections (112).

3. Valve cage (100) according to claim 2, **characterized in that** the outlet openings (110) arranged in a row are each aligned tangentially adjacent to the adjoining arcuate outer contour portion (112) as viewed in the direction of flow (S).

4. Valve cage (100) according to claim 2, **characterized in that** a slot (116) extending in the axial direction (a) is formed in the step (114), with the outlet openings (110) arranged in a row opening into this slot (116), with the slot (116) being aligned tangentially adjacent to the adjoining arcuate outer contour portion (112) as viewed in the direction of flow (S).

5. Valve cage (100) according to any one of claims 1 to 4 above, **characterized in that,** as viewed in the circumferential direction (u), the valve cage (100) has an even number (n) of steps and arcuate outer contour sections (112).

6. Valve cage (100) according to claim 5, **characterized in that** the n arcuate outer contour sections (112) and the n steps (114) are arranged to be axially symmetrically to an axis of symmetry (AS) which is aligned perpendicular to the direction in which the valve cage (100) extends.

7. Valve cage (100) according to any one of the preceding claims, **characterized in that** - starting from their inlet openings (106) on the inner contour side to the outlet openings (110) on the outer contour side - the throttle channels (104) are designed to have a curved course.

8. Valve cage (100) according to any one of the preceding claims, **characterized in that** the throttle channels (104) are designed to continuously increase in channel cross-section starting from the inlet openings (106) to the outlet openings (110).

9. Valve cage (100) according to any one of the preceding claims, **characterized in that** the throttle channels (104) are designed to be essentially of the same length.

10. Valve cage (100) according to any one of the preceding claims, **characterized by** a substantially hollow cylindrical basic shape with an outer contour (118) which is at least substantially circular as viewed along an axial direction (a), with the outlet openings (110) of the throttle channels (104) and/or the steps (114) each acting as a tear-off edge being arranged substantially on the outer contour (118) of the valve cage (100) as viewed along the axial direction (a).

11. Valve cage (100) according to any one of the preceding claims, **characterized in that** the throttle channels (104) are curved in an outflow direction (AB), with the valve cage (100) having at least one outflow edge (122) which is arranged on an outer side (120) of the valve cage (100) formed in the outflow direction (AB), which outflow edge (122), as viewed along a circumferential direction (u), delimits at least one of the outer contour sections (112) and is arranged at a distance from the steps (114), with the outflow edge (122) preferably being intended to cause a flow guided along the respective outer contour portion (112) to tear off in the downstream direction (AB).

12. Valve cage (100) according to claim 11, **characterized by** two outflow edges (122) arranged on the outer side (120) of the valve cage (100) formed in the outflow direction (AB), which outflow edges (122) each delimit one of the outer contour sections (112) as viewed along the circumferential direction (u) and together delimit, in particular on two opposite sides, an outer surface (124) of the valve cage (100), which is formed angled away from the outer contour sections (112) via the two outflow edges (122).

13. Valve cage (100) according to any one of the preceding claims, **characterized by** at least one additional throttle channel (126), which is adapted to be essentially symmetrically with respect to an axis of symmetry (SA) of the valve cage (100) and which is arranged at a distance from the steps (114) and the throttle channels (104), which at least one additional throttle channel (126) extends from an inner side of the valve cage (100) to an outer side (120) of the valve cage (100) formed in the downstream direction (AB), said at least one additional throttle channel (126) preferably being provided to generate a flow directed in the outflow direction (AB).

14. Valve cage (100) according to any one of the preceding claims, **characterized in that** the valve cage (100) is made of a metallic material.

15. Control valve (10), comprising a valve housing (12) with a valve inlet (14) and a valve outlet (16), a valve cage (100) disposed between the valve inlet and valve outlet (14, 16), and a valve member (18) moveably mounted in the valve housing (12) and interacting with the valve cage (100), **characterized in that** the valve cage (100) is designed as specified in any one of claims 1 to 14 above.

## Revendications

1. Cage de soupape (100) pour une soupape de réglage (10), comprenant plusieurs canaux d'étranglement (104) s'étendant à partir d'un contour intérieur de la cage de soupape (100) en direction du contour extérieur de celle-ci, traversant la cage de soupape (100), dans laquelle chaque canal d'étranglement (104) présente vu dans la direction d'écoulement (S) une ouverture d'entrée côté contour intérieur (106) et une ouverture de sortie côté contour extérieur (110), **caractérisée en ce que** vu dans la direction périphérique (u) la cage de soupape (100) présente plusieurs parties de contour extérieur (112) réalisées de manière arquée, qui sont séparées les unes des autres respectivement par l'intermédiaire d'un gradin (114) orienté par rapport à la surface d'enveloppe des parties de contour extérieur dans la direction radiale (r), agissant comme un bord de rupture, et que les canaux d'étranglement (104) sont disposés de manière à s'étendre de telle sorte que les ouvertures de sortie côté contour extérieur (110) des canaux d'étranglement (104) dans le gradin (114) sont disposées entre deux parties de contour extérieur (112).

2. Cage de soupape (100) selon la revendication 1, **caractérisée en ce que** plusieurs ouvertures de sortie (110) disposées en rangée dans la direction axiale (a) sont disposées dans le gradin (114) entre deux parties de contour extérieur (112).

3. Cage de soupape (100) selon la revendication 2, **caractérisée en ce que** les ouvertures de sortie (110) disposées en rangée sont orientées respectivement tangentiellement de manière adjacente à la partie de contour extérieur (112) arquée attenante vu dans la direction d'écoulement (S).

4. Cage de soupape (100) selon la revendication 2, **caractérisée en ce qu'**une fente (116) s'étendant dans la direction axiale (a), dans laquelle débouchent les ouvertures de sortie (110) disposées en rangée, est réalisée dans le gradin (114), dans laquelle la fente (116) est orientée tangentiellement de manière adjacente à la partie de contour extérieur (112) arquée attenante vu dans la direction d'écoulement (S).

5. Cage de soupape (100) selon l'une quelconque des revendications 1 à 4, **caractérisée en ce que** vu dans la direction périphérique (u) la cage de soupape (100) présente un nombre pair (n) de gradins et parties de contour extérieur (112) réalisées de manière arquée.

6. Cage de soupape (100) selon la revendication 5, **caractérisée en ce que** les n parties de contour extérieur (112) arquées et les n gradins (114) sont disposés en symétrie axiale par rapport à un axe de symétrie (AS) orienté perpendiculairement à la direction d'étendue de la cage de soupape (100).

7. Cage de soupape (100) selon l'une quelconque des revendications précédentes, **caractérisée en ce que** - à partir de leurs ouvertures d'entrée côté contour intérieur (106) vers les ouvertures de sortie côté contour extérieur (110) - les canaux d'étranglement (104) sont réalisés de manière à présenter un tracé courbé.

8. Cage de soupape (100) selon l'une quelconque des revendications précédentes, **caractérisée en ce que** les canaux d'étranglement (104) sont réalisés de manière à présenter une section transversale de canal décroissante en continu à partir des ouvertures d'entrée (106) vers les ouvertures de sortie (110).

9. Cage de soupape (100) selon l'une quelconque des revendications précédentes, **caractérisée en ce que** les canaux d'étranglement (104) présentent une longueur sensiblement identique.

10. Cage de soupape (100) selon l'une quelconque des revendications précédentes, **caractérisée par** une forme de base sensiblement de forme cylindrique creuse avec un contour extérieur (118) au moins sensiblement circulaire vu le long d'une direction axiale (a), dans laquelle les ouvertures de sortie (110) des canaux d'étranglement (104) et/ou les gradins (114) agissant respectivement comme un bord de rupture sont disposés sensiblement sur le contour extérieur (118) de la cage de soupape (100) vu le long de la direction axiale (a).

11. Cage de soupape (100) selon l'une quelconque des revendications précédentes, **caractérisée en ce que** les canaux d'étranglement (104) sont réalisés respectivement de manière courbée dans une direction d'évacuation (AB), dans laquelle la cage de soupape (100) présente au moins un bord d'évacuation (122) disposé sur un côté extérieur (120) de la cage de soupape (100) réalisé dans la direction d'évacuation (AB), qui vu le long d'une direction périphérique (u) délimite au moins une des parties de contour extérieur (112) et est disposé à distance des gradins (114), dans laquelle le bord d'évacuation (122) est destiné de préférence à provoquer dans la direction d'évacuation (AB) une rupture d'un écoulement guidé le long de la partie de contour extérieur (112) respective.

12. Cage de soupape (100) selon la revendication 11, **caractérisée par** deux bords d'évacuation (122) disposés sur le côté extérieur (120) de la cage de soupape (100) réalisé dans la direction d'évacuation (AB), qui vu le long de la direction périphérique (u) délimitent respectivement une des parties de contour extérieur (112) et délimitent conjointement, en particulier sur deux côtés opposés, une surface extérieure (124) de la cage de soupape (100), qui est réalisée de manière coudée à partir des parties de contour extérieur (112) par l'intermédiaire des deux bords d'évacuation (122).

13. Cage de soupape (100) selon l'une quelconque des revendications précédentes, **caractérisée par** au moins un autre canal d'étranglement (126), lequel est réalisé sensiblement de manière symétrique par rapport à un axe de symétrie (SA) de la cage de soupape (100) et est disposé à distance des gradins (114) et des canaux d'étranglement (104), dans laquelle le au moins un autre canal d'étranglement (126) s'étend à partir d'un côté intérieur de la cage de soupape (100) jusqu'à un côté extérieur (120) de la cage de soupape (100) réalisé dans la direction d'évacuation (AB), dans laquelle le au moins un autre canal d'étranglement (126) de préférence destiné à produire un écoulement dirigé dans la direction d'évacuation (AB).

14. Cage de soupape (100) selon l'une quelconque des revendications précédentes, **caractérisée en ce que** la cage de soupape (100) est fabriquée à partir d'un matériau métallique.

15. Soupape de réglage (10), comprenant un carter de soupape (12) avec une entrée de soupape (14) et une sortie de soupape (16), une cage de soupape (100) disposée entre l'entrée de soupape et la sortie de soupape (14, 16) ainsi qu'un organe de soupape (18) monté déplaçable dans le carter de soupape (12), agissant conjointement avec la cage de soupape (100), **caractérisée en ce que** la cage de soupape (100) est réalisée selon l'une quelconque des revendications 1 à 14.

10

100

20

12

18

14

16

S

S

S

a

Fig. 1

Fig. 2

Fig. 3

Fig. 4

Fig. 5

Fig. 6

EP 4 352 391 B1

Fig. 7

18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015005611 A1
- WO 2016187246 A
- WO 2003016767 A
- DE 102016102756 A1